# DEMANDE DE BREVET EUROPEEN

(11) **EP 4 074 633 A1**
(43) Date de publication de la demande: **19.10.2022**
(21) Numéro de dépôt: 22168657.9
(22) Date de dépôt: 15.04.2022
(51) Int. Cl.: B65G 35/06, B23Q 7/14, B67C 7/00, B65G 19/02

(54) **SYSTÈME DE MANUTENTION DE PLAQUES DANS UNE MACHINE TRAITANT DES RÉCIPIENTS**

(30) Priorité: 16.04.2021 FR 2103969
(71) Demandeur: SYNERLINK, 95650 Puiseux-Pontoise (FR)
(72) Inventeur: COSSAIS, Dominique, 91700 SAINTE GENEVIÈVE DES BOIS (FR); MASSOT, Patrick, 72380 JOUE L'ABBE (FR); DOITEAU, Gaëtan, 72000 LE MANS (FR); ROYER, Jean-Michel, 95650 PUISEUX PONTOISE (FR)
(74) Mandataire: Derambure Conseil

(57) **Abrégé**

Système de manutention, dans une machine de traitement de récipients, comprenant une pluralité de plaques-support (1) circulant en circuit fermé, chaque plaque-support (1) comprenant un ou plusieurs logements, chaque logement (18) étant apte à recevoir un récipient (5), un tronçon (TC1) de travail, dans lequel les plaques-support circulent en position horizontale, avec un premier organe de déplacement (2) des plaques-support le long d'une première direction axiale (X1A), un tronçon (TC2) de retour rapide, avec un deuxième organe de déplacement (3) configuré pour déplacer les plaques-support selon une direction axiale (X1B) opposée, les plaques-support circulant sur le tronçon de retour dans une orientation de retour verticale, le système de manutention comprenant des postes de rotation (PR1 ,PR2), pour faire pivoter les plaques-support.

## Description

La présente invention est relative aux systèmes de manutention dans une machine traitant des récipients de produit alimentaire. On peut appeler aussi ces machines des équipements ou lignes de production.

Ces machines (ou « équipements » ou « lignes ») permettent de remplir des récipients, par exemple des pots ou des bouteilles, avec un ou plusieurs produits alimentaires, par exemple un produit laitier et/ou des composants alimentaires, et de fermer hermétiquement ces récipients, avec en outre optionnellement marquage, étiquetage, désinfection préalable ou autre opération.

Ces machines/équipements utilisent des supports, par exemples des plaques, pour supporter les récipients pendant les opérations réalisées dans la machine.

Ces supports parcourent un circuit bouclé, en effet ils reviennent à vide après avoir été déchargés du/des récipients traité(s).

Ce genre de plaque-support est utilisé aussi dans des machines ou des installations qui traitent des récipients de produits non alimentaires auxquelles la présente invention peut être appliquée.

Les inventeurs ont remarqué toutefois que le circuit de retour des plaques support occupait une place importante dans une telle installation, que le retour se produise par le dessous, ou par le dessus, ou au même niveau, par rapport au tronçon de travail. Généralement les plaques parcourent le circuit retour, dans une posture parallèle à la posture du circuit de travail, dans une orientation identique au circuit de travail ou après avoir subi un retournement de 180 degrés.

Il est donc apparu un besoin pour proposer une amélioration à propos du circuit des plaques-support.

À cet effet, il est donc proposé un système de manutention, dans une machine de traitement de récipients destinés à recevoir un produit alimentaire, le système de manutention comprenant :
- une pluralité de plaques-support circulant en circuit fermé, chaque plaque-support comprenant un ou plusieurs logements, chaque logement étant apte à recevoir un récipient,
- un premier tronçon (TC1), dit de travail, dans lequel les plaques-support circulent en position horizontale, dans une première direction axiale (X1A), avec un premier organe de déplacement des plaques-support le long de la première direction axiale, le premier organe étant de préférence de type pas à pas, chacune des plaques supports étant entraînée uniquement par un de leur bord longitudinal
- un deuxième tronçon (TC2), dit de retour rapide, avec un deuxième organe de déplacement configuré pour déplacer les plaques-support selon une deuxième direction axiale (X1B) opposée à la première direction axiale,
   dans lequel les plaques-support circulent sur le deuxième tronçon dans une orientation de retour, ladite orientation de retour étant verticale ou éloignée angulairement de la verticale de moins de 30 degrés,
   et dans lequel le système de manutention comprend :
- un premier poste de rotation agencé à une première extrémité E1 du système de manutention, configuré pour faire pivoter les plaques-support vers la position horizontale, pour les engager sur le premier tronçon (TC1),
- un deuxième poste de rotation agencé à une deuxième extrémité (E2) du système de manutention, configuré pour faire pivoter les plaques-support vers l'orientation de retour pour les engager sur le deuxième tronçon (TC2).

Grâce à ces dispositions, le chemin de retour des plaques occupe une place réduite. La compacité générale de la machine/ligne peut être améliorée. De même l'emprise au sol de la machine peut être réduite. De plus, cette disposition du système de manutention facilite l'accès aux différents éléments et organes de la ligne de production, notamment pour des motifs de surveillance et maintenance.

Dans une configuration la plus simple, les premier et deuxième tronçons TC1 et TC2 sont sensiblement de même longueur et rectilignes, ce qui forme une construction simple et économiquement pertinente.

Autrement dit, si on définit un axe longitudinal de travail (i.e. de la machine) noté X, et un axe longitudinal de référence du système de manutention noté X1, à la fin du tronçon de travail, la plaque support subit une rotation autour de l'axe longitudinal de référence X1 d'un angle θ (90° dans un cas type) puis la plaque parcourt le tronçon de retour en gardant substantiellement cette orientation, après quoi la plaque support subit une rotation dans le sens inverse autour de l'axe longitudinal X1 d'un angle -θ.

On remarque que, dans le premier tronçon, la plaque est entrainée par un seul de ses bords longitudinaux, le bord opposé étant seulement guidé mais pas entrainé. La motorisation (e.g. organe de déplacement) est ainsi relativement simple et se trouve localisée au voisinage de l'axe longitudinal X1 du système de manutention.

On remarque aussi que dans le deuxième tronçon TC2, chacune des plaques support est entraînée à proximité du même bord longitudinal, le bord longitudinal opposé n'étant pas entraîné. En pratique, le bord longitudinal opposé est libre de toute interaction, il pend simplement.

S'agissant de l'orientation des plaques-support, la forme des plaques est définie par leur deux grandes dimensions que l'on peut appeler longueur et largeur et par une dimension substantiellement plus faible que l'on appelle épaisseur. L'orientation de plaque est dite horizontale lorsque les deux grandes dimensions s'étendent horizontalement et l'épaisseur s'étend verticalement, et l'orientation de plaque est dite verticale lorsque l'épaisseur s'étend dans une direction horizontale.

Par « organe de déplacement pas à pas », il faut comprendre un mécanisme permettant une avance d'une distance prédéfinie puis un arrêt pour un traitement à poste fixe.

Il faut toutefois noter qu'un mécanisme d'avance continu dans le premier tronçon n'est pas exclu dans le cadre de l'application de la présente invention.

Concernant le tronçon de retour, le deuxième organe de déplacement peut être de type continu ou de type discontinu.

Dans divers modes de réalisation de l'invention, on peut éventuellement avoir recours en outre à l'une et/ou à l'autre des dispositions suivantes, prises isolément ou en combinaison.

Selon un aspect, le premier poste de rotation PR1 comprend une première embase tournante 41, et le deuxième poste de rotation PR2 comprend une deuxième embase tournante 42 et il est prévu un support guide principal fixe 40, disposé de manière continue le long de la première direction axiale X1A entre les première et deuxième embases tournantes.

La première embase tournante fait pivoter les plaques-support vers la position horizontale, pour les engager sur le premier tronçon, tandis que la deuxième embase tournante fait pivoter les plaques-support vers l'orientation de retour pour les engager sur le deuxième tronçon.

On forme ainsi une solution simple et fiable pour implémenter les pivotements et le guidage dans le premier tronçon de travail.

De plus grâce au support guide principal fixe, on fournit un guidage positif et continu des plaques depuis la première extrémité E1 jusqu'à la deuxième extrémité E2 sur le premier tronçon TC1. On note ici que le guidage sur le deuxième tronçon (celui de retour rapide) peut être allégé, voire même un guidage souple suffit, par suspension par exemple.

Selon un aspect, le premier poste de rotation et/ou le deuxième poste de rotation peut/peuvent être différentes d'une embase rotative, et être réalisées par effet de came avec rotation et avancement progressifs.

Selon un aspect, chaque plaque-support comprend au moins une encoche pour recevoir un doigt du premier organe de déplacement. Optionnellement on peut prévoir de préférence deux encoches dans chaque plaque-support.

On peut utiliser un actuateur d'avance pas-à-pas engageant les encoches des différentes plaques support. Avec une encoche par plaque, on avance de préférence d'un pas sensiblement égal à la longueur de la plaque. Avec deux encoches par plaque, on peut avancer d'un pas égal à la longueur de la plaque ou d'un pas égal à la moitié de la longueur de la plaque.

En outre il peut être prévu quatre encoches par plaque, pour une cinématique d'avance à quart de longueur de plaque.

Selon un aspect, l'encoche est traversante. Ceci est facile à nettoyer et on évite que des saletés ne viennent se loger dans un trou borgne.

Selon un aspect, l'encoche est agencée sur la tranche de la plaque. Une telle forme est facile à réaliser, également facile à nettoyer.

Selon un aspect, le premier organe de déplacement comprend deux degrés de liberté, à savoir une rotation autour de la direction axiale X1 et un avancement selon la direction axiale X1.

Selon un aspect, le premier organe de déplacement comprend un doigt agencé à distance de l'axe X1 et configuré pour être reçu dans une encoche de la plaque, le retour à vide du doigt étant réalisé lorsque le doigt n'est pas engagé.

Ainsi le premier organe de déplacement peut être qualifié de « navette transfert ». Selon les configurations possibles, il peut provoquer une avance d'un quart, de la moitié ou d'une entière longueur axiale de plaque-support.

Selon un aspect, chaque plaque-support s'étend généralement dans un plan de référence PR, avec une forme générale rectangle, chaque plaque-support comprend deux grands côtés, i.e. un grand coté formant bordure de guidage et manœuvre, un autre grand coté formant bordure libre. Les deux petits côtés peuvent être rectilignes ou non.

Selon un aspect, chaque plaque-support est de préférence plane. Cette plaque est alors facile à fabriquer à partir d'un flan découpé. C'est aussi une solution économique qui minimise les reprises d'usinage.

Selon un aspect, chaque plaque-support est faite d'une seule pièce. Cette plaque est alors d'un lavage facile, étant dépourvue de joint d'assemblage.

Selon un aspect, chaque plaque-support est faite en inox ou en alliage métallique compatible alimentaire. Ceci favorise pour les plaques-support la légèreté, la durabilité et l'hygiène versus le du contact alimentaire.

Selon un aspect, on définit une face supérieure de la plaque-support, et rien ne dépasse de la face supérieure, excepté le cas échéant des plots de centrage agencés sur la périphérie des logements. On remarque que les faces supérieures des plaques dans le tronçon de travail affleurent au niveau d'un plan de travail noté PW.

Selon un aspect, il est prévu au moins une rainure dans la plaque pour le maintien de la plaque notamment lorsqu'elle est en orientation de retour. Cette rainure permet le maintien de la plaque le long du circuit retour et empêche les plaques de glisser vers le bas et/ou de tomber.

Selon un aspect, la rainure est agencée sur la face de dessous, alors que les encoches sont agencées sur la face de dessus ou sur la tranche. Ainsi la rainure ne retient pas de petits déchets et reste propre.

Selon une solution alternative, il est prévu au moins une projection hors plan dans la plaque, ou une nervure, pour le maintien de la plaque notamment lorsqu'elle est en orientation de retour.

Selon un aspect, il est prévu un support guide auxiliaire, pour supporter les plaques supports, du côté porte à faux, coté bord libre, dans le premier tronçon.

Selon un aspect, ledit support guide auxiliaire est amovible, en partie ou en totalité. On peut ainsi si nécessaire retirer le support guide auxiliaire pour avoir un accès complet aux systèmes de manutention ou à un des modules de la machine.

Selon un aspect, ledit support guide auxiliaire est porté par un équipement de traitement de la machine, i.e. un ou plusieurs des modules de process dont la ligne est composée. Ainsi, on peut se passer d'une béquille pour tenir ce support auxiliaire en porte-à-faux.

Selon un aspect, le deuxième organe de déplacement, est formé comme un convoyeur à chaîne ou à courroie en boucle. Ce type de solution est rustique et robuste, et très fiable. En alternative on peut prévoir des galets motorisés comme deuxième organe de déplacement.

Selon un aspect, le deuxième organe de déplacement, peut être formé comme un convoyeur à courroie en boucle à double denture (une denture à l'intérieur pour l'entraînement de la courroie et une denture à l'extérieur pour l'entraînement des plaques-support par la courroie).

Selon un aspect, le système est tel que le nombre de plaques dans le premier tronçon TC1 est supérieur au double du nombre de plaques dans le deuxième tronçon TC2. On minimise ainsi le nombre de plaques total ; la plupart des plaques sont utilisées sur le tronçon de travail et très peu de plaques sont présentes dans le tronçon de retour. On remarque que dans nombre de systèmes connus de l'art antérieur le nombre de plaques sur le retour est égal au nombre de plaques sur le tronçon aller-travail.

Selon un aspect, le système est tel la vitesse moyenne sur le deuxième tronçon TC2 est substantiellement supérieure, voire très supérieure, à la vitesse moyenne sur le premier tronçon TC1. Cette caractéristique peut conduire également à minimiser le nombre de plaques dans le tronçon de retour.

Selon un aspect, le deuxième organe de déplacement peut fonctionner par élan, avec une impulsion de vitesse, et possiblement un frein d'arrivée. Selon un aspect alternatif, on peut prévoir un retour par gravité.

Selon un aspect, le deuxième organe de déplacement peut être formé comme une navette transfert à grands pas, un multiple de PX.

Selon un aspect, le système de manutention est tel qu'au poste de rotation PR1, on forme arrêt pour les plaques verticales en retour en attendant la position ad hoc de l'embase tournante. Cette fonction peut être réalisée par une butée effaçable. On forme une zone d'accumulation des plaques en retour, on stocke à cet endroit le surplus de plaques en attente.

Selon un aspect, les plaques sont adjacentes dans le premier tronçon TC1, on utilise un fonctionnement par poussage. Il suffit alors de faire avancer la première plaque sur le premier tronçon TC1, ce qui simplifie la conception de la navette transfert et ce qui diminue son coût.

Selon un aspect, le premier organe de déplacement, à savoir la navette transfert, engage individuellement toutes les plaques ou quasiment toutes les plaques sur le premier tronçon TC1. Dans ce cas les plaques ne se poussent pas mutuellement,

Selon un aspect, les plaques sont espacées dans le premier tronçon TC1, avec un fonctionnement par transfert/avancement d'un pas légèrement supérieur à la longueur de la plaque. On ménage ainsi un petit jeu fonctionnel qui évite un frottement entre les plaques.

Selon un aspect, il peut être superflu d'utiliser des indexages d'avance aux postes de travail ; l'avancement maîtrisé par le premier organe de déplacement suffit à assurer la précision requise pour l'arrivée de la plaque ; seul un indexage de travail peut être nécessaire suivant l'opération.

Selon un aspect, les plaques comportent 8 logements, ou 4 ou 6 ou toute autre valeur. L'invention fonctionne quelque soit le nombre de logements prévus dans la plaque.

Selon un aspect, les plaques comportent de 1 à 4 rangées de logements selon la direction transversale Y, et dans chaque rangée on peut trouver de 1 à 4 logements disposés le long de l'axe longitudinal.

Selon un aspect, les logements pour les récipients occupent une zone centrale par rapport à chaque plaque support. Les récipients, e.g. pots ou bouteilles, s'étendent vers le bas à partir du plan de référence de la plaque support, entre les deux bords longitudinaux de la plaque support.

Selon un aspect, les plaques présentent une longueur longitudinale PX comprise entre 250mm et 680mm, de préférence comprise entre 360mm et 520mm, et de manière encore plus préférée comprise entre 400 mm et 480mm

Selon un aspect, les plaques ont une épaisseur comprise entre 3 mm et 10 mm. Selon un exemple particulier on peut choisir une épaisseur entre 6 mm et 8 mm.

Selon un aspect, les plaques peuvent être réalisées en deux parties à savoir une plaque plane avec les logements et un profilé technique pour les fonctions guidage et entrainement.

La présente invention vise également une machine pour traiter des pots ou des bouteilles de produit alimentaire, comprenant un système de manutention tel que décrit précédemment.

Ainsi, les modules process peuvent venir par le dessus et le dessous sans être gênés par les supports des plaques.

D'autres aspects, buts et avantages de l'invention apparaîtront à la lecture de la description suivante d'un mode de réalisation de l'invention, donné à titre d'exemple non limitatif. L'invention sera également mieux comprise en regard des dessins joints sur lesquels :
- la figure 1 illustre en vue de profil une machine ou un équipement comprenant un système de plaques selon la présente invention,
- la figure 2 illustre en vue perspective la machine de la figure 1,
- la figure 3 illustre en vue perspective un système de manutention selon un mode de réalisation de l'invention,
- la figure 4 illustre en vue perspective la zone du premier poste de rotation agencé à une première extrémité de du système,
- la figure 5 illustre en vue perspective la zone du deuxième poste de rotation agencé à une deuxième extrémité de du système,
- la figure 6 illustre une coupe transversale du système de manutention dans le premier tronçon, dit de travail,
- la figure 7 est analogue à la figure 6, illustrant en outre le premier organe de déplacement,
- la figure 8 illustre une coupe transversale du système de manutention dans le deuxième tronçon de retour,
- la figure 9 illustre une coupe transversale du système de manutention avec le guide support auxiliaire,
- la figure 10 montre une vue de face de la machine,
- la figure 11 illustre une plaque en vue de dessus (A), de côté (B) et de face (C),
- la figure 12 illustre une variante de plaque en vue de face,
- la figure 13 est analogue à la figure 9 et illustre plus en détail une coupe transversale du système de manutention selon une variante, au niveau de l'axe longitudinal.
- la figure 14 est analogue à la figure 9 et illustre plus en détail une coupe transversale du système de manutention selon une autre variante, au niveau de l'axe longitudinal.
- les figures 15 et 16 illustrent le deuxième convoyeur de retour, ici dans une variante à courroie et sa motorisation, le tout ayant pour fonction d'entraîner les plaques en retour vertical le long du deuxième tronçon,
- la figure 17 est analogue à la figure 1 et montre une variante de disposition générale du système de manutention par rapport à la machine,
- les figures 18 à 20 illustrent un autre mode de réalisation, parmi lesquelles :

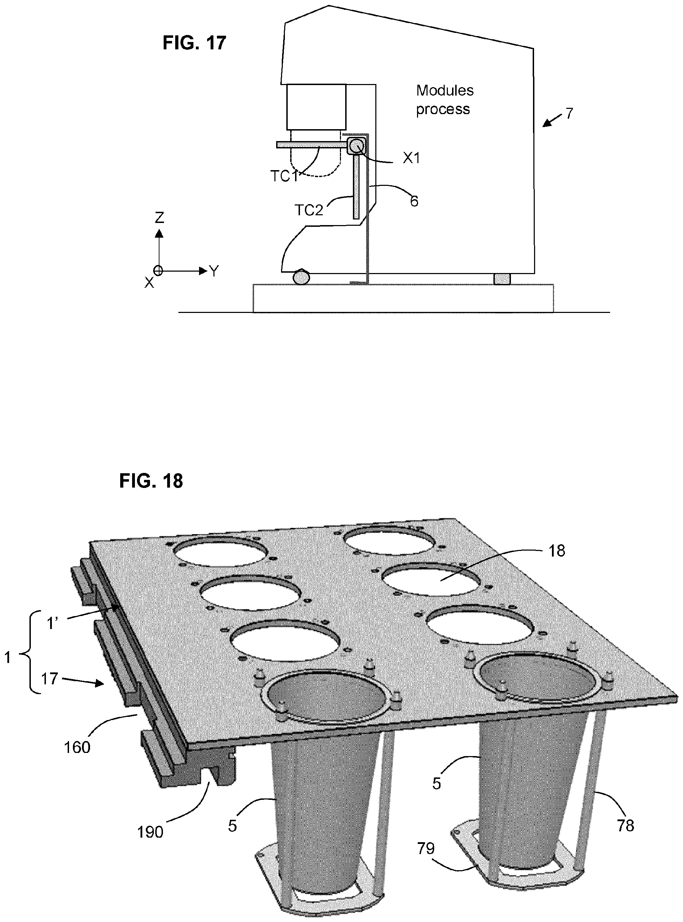

- la figure 18 illustre une plaque en vue en perspective, et illustre une variante concernant le maintien des récipients dans les logements des plaques,

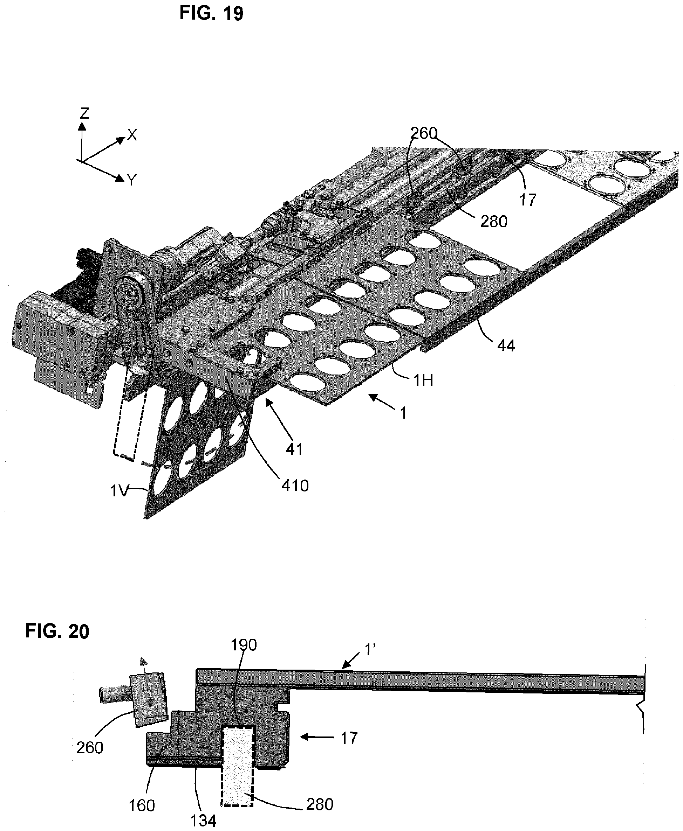

- la figure 19 illustre en partie le système de manutention vue de la première extrémité,
- la figure 20 illustre une plaque en vue selon l'axe, avec plus en détails les moyens de guidage et d'entrainement,

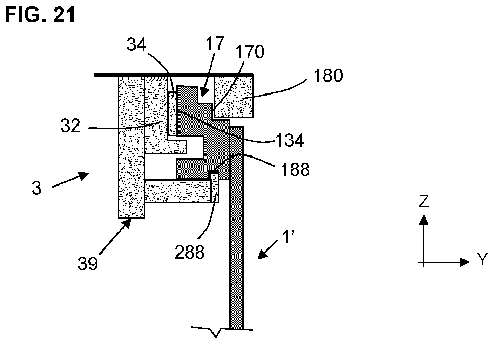

- la figure 21 montre une section de coupe du système de manutention dans le deuxième tronçon, formant le tronçon de retour.

Sur les différentes figures, les mêmes références désignent des éléments identiques ou similaires. Pour des raisons de clarté de l'exposé, certains éléments peuvent intentionnellement ne pas être représentés à l'échelle sur les dessins.

### Généralités et agencement général

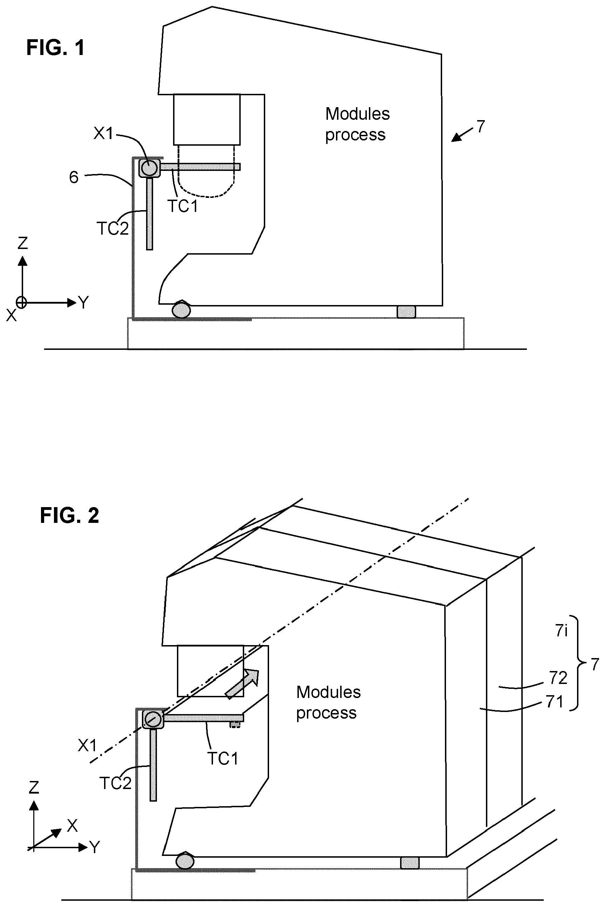

Les figures 1 et 2 représentent une machine traitant des récipients de produit alimentaire. Il peut s'agir de produits lactés, de sirops, de boissons en tout genre, voire de produits pâteux ou en poudre, sans exclure des glaces et de l'alimentation animale. La présente invention s'applique en effet à tout produit alimentaire.

On s'intéresse en particulier au système de manutention mis en œuvre dans ces machines. Toutefois on note que les systèmes de manutention décrits ci-après sont applicables à toute ligne de fabrication, même en dehors du domaine alimentaire.

Pour revenir au domaine alimentaire, ces machines/équipements/lignes permettent de remplir des récipients, par exemple des pots ou des bouteilles, avec un ou plusieurs produits alimentaires, par exemple un produit laitier et/ou des composants alimentaires, et de fermer hermétiquement ces récipients. Il peut être prévu en outre optionnellement des opérations de marquage, étiquetage, désinfection préalable. Toute autre opération n'est pour autant pas exclue. On a illustré aux figures 1 et 2 des modules de traitement juxtaposés dans le sens axial de la machine repérés respectivement **71, 72, 7i.** Les différents modules de traitement ou modules process sont collectivement repérés par la référence **7.**

On utilise des supports, que l'on va appeler *plaques-support,* ou même simplement *plaques,* pour supporter les récipients pendant les opérations réalisées dans la machine.

Ces supports, généralement repérés par la référence **1,** parcourent un circuit bouclé, c'est-à-dire fermé, en effet dans la machine, ils reviennent à vide après avoir été déchargés du/des récipients traité(s).

Selon un agencement général, le système de manutention comprend un premier tronçon **TC1,** dit de travail. En outre, le système de manutention comprend un deuxième tronçon **TC2,** dit de retour rapide.

On remarque ici que la réunion du premier tronçon **TC1** et du deuxième tronçon **TC2** forment ensemble, avec les postes de rotation aux extrémités décrits plus loin, un circuit fermé, c'est-à-dire un circuit bouclé en exploitation normale.

A un endroit, chaque plaque-support **1** est chargée avec des récipients vides, et à un autre endroit, en aval, les récipients remplis sont ôtés de la plaque-support 1.

Chaque plaque-support **1** comprend un ou plusieurs logements **18,** chaque logement **18** étant apte à recevoir un récipient.

Selon une première possibilité, le récipient est reçu par le dessus, auquel cas c'est par l'effet de la gravité qu'un bord supérieur 58 du récipient porte sur un bord du logement. Le logement peut être formé comme un orifice. Selon cette première possibilité, le récipient est typiquement un pot **5** avec une collerette **58** plus large que son corps.

Selon une autre possibilité, le récipient peut être reçu par insertion latérale, un col du récipient vient se loger dans un logement présentant une embouchure et un détroit. Après passage du col du récipient par le détroit, le récipient reste retenu dans un trou de dimension correspondant à la dimension du col. Selon cette autre possibilité, le récipient est typiquement une bouteille avec un col et un goulot.

Selon encore une autre possibilité illustrée à la figure 18, il est prévu le cas où il n'y a pas de collerette en partie supérieure.

Le nombre de logements peut être de 4 ou de 8. Toutefois, le nombre de logements peut être quelconque, de 2 à 16. Le nombre de rangées selon l'axe transversal Y peut être de 1, de 2, voire de quatre rangées ; sur chacune des rangées on peut avoir de 1 à quatre logements.

Selon un agencement général, le système de manutention comprend une première extrémité **E1** et une deuxième extrémité **E2.**

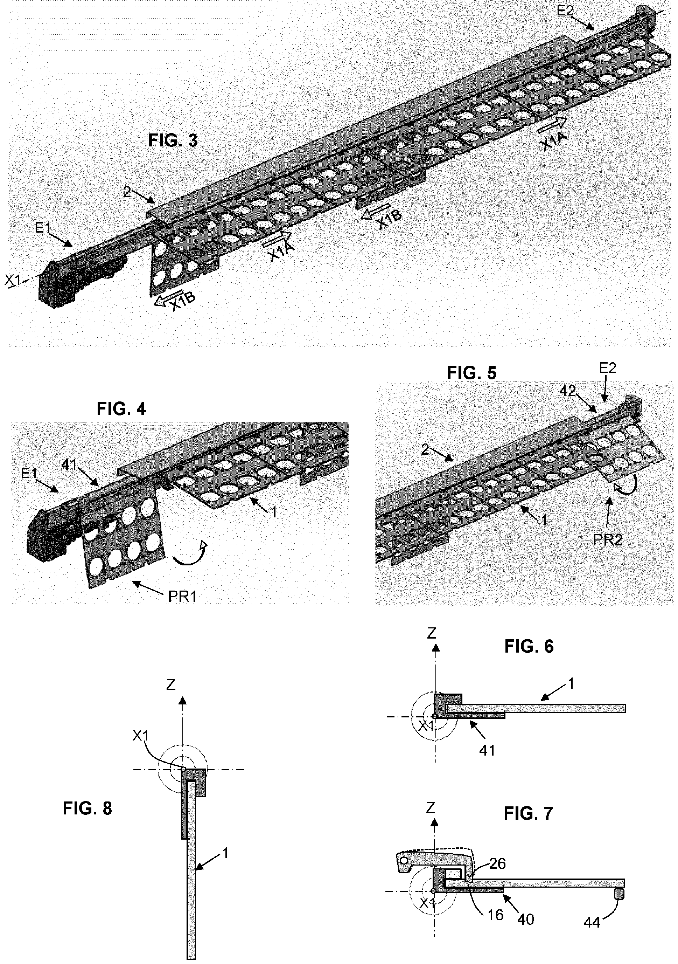

Comme illustré aux figures 3 à 5, selon un agencement général du système, il est prévu un premier poste de rotation **PR1** agencé à la première extrémité **E1,** configuré pour faire pivoter les plaques-support vers la position horizontale, pour les engager sur le premier tronçon **TC1.** De plus, il est prévu un deuxième poste de rotation **PR2** agencé à la deuxième extrémité **E2,** configuré pour faire pivoter les plaques-support vers l'orientation de retour pour les engager sur le deuxième tronçon **TC2.**

L'axe longitudinal de travail (i.e. de la machine) est noté **X** ; on définit un axe longitudinal de référence du système de manutention noté **X1.** L'axe transversal de la machine est noté **Y** l'axe vertical local est noté **Z.**

L'ensemble du système de manutention est supporté par un châssis général de support repéré **6** (représenté seulement de manière générique aux Figures 1, 2 et 17).

On remarque que deux configurations sont possibles. Aux figures 1 et 2, l'axe **X1** est situé côté extérieur de la machine, i.e. les plaques **1** dans le tronçon **TC1se** trouvent entre l'axe **X1** et les modules process 7. A la figure 17, c'est l'inverse, l'axe **X1** est situé côté intérieur de la machine, i.e. l'axe X1 se trouve entre les plaques **1** sur le premier tronçon **TC1** et les modules process **7.**

### Plague-supports et leur circulation

Comme visible aux figures 3 à 9 ainsi que 11A, 11B, 11C et 12, chaque plaque-support **1** s'étend généralement dans un plan de référence **PR,** avec une forme générale rectangle. Chaque plaque-support comprend deux petits côtés respectivement repérés 13 et 14, parallèles à la direction Y de la machine. Chaque plaque-support deux grands côtés parallèles à la direction longitudinale X de la machine, à savoir un premier grand coté **11** formant bordure de guidage et manœuvre, et un autre grand coté **12** formant bordure libre. La longueur longitudinale notée **PX** est ici comprise entre 400 mm et 480mm. Toutefois plus généralement la longueur PX peut être comprise entre 250mm et 680mm, ou bien comprise entre 360mm et 520mm. On note qu'il peut être prévu un petit jeu longitudinal entre les plaques.

La largeur de la plaque notée **LW** ici comprise entre 250 mm et 350 mm. Toutefois plus généralement la largeur LW peut être comprise entre 200 mm et 500 mm.

Chaque plaque-support est faite d'une seule pièce. Chaque plaque-support est plane. L'épaisseur d'une plaque **EPP** peut typiquement être comprise entre 3 et 10 mm. Typiquement, on part d'un flan d'épaisseur constante et on y aménage les encoches et rainures donc il va être question plus loin. Selon un exemple l'épaisseur EPP peut être de 8 mm. Selon un autre exemple, l'épaisseur EPP peut être comprise entre 6 mm et 8 mm.

Chaque plaque-support **1** comprend une face supérieure **1A** et une face inférieure **1B.**

Chaque plaque-support **1** peut être fabriquée en inox ou en alliage métallique compatible alimentaire. Toutefois un matériau de type plastique dur compatible alimentaire comme du polypropylène ou du polycarbonate pourrait aussi convenir.

Dans le premier tronçon **TC1,** les plaques-support circulent en position horizontale dans une première direction axiale **X1A.** Dans les diverses illustrations, les plaques sont adjacentes les unes aux autres dans le premier tronçon. Toutefois il n'est pas exclu qu'elles soient légèrement espacées les unes des autres.

Dans le tronçon de retour **TC2,** les plaques-support avancent dans une deuxième direction axiale **X1B** opposée à la première direction axiale. Dans ce deuxième tronçon **TC2,** les plaques-support circulent dans une posture ou orientation qui est différente de la position horizontale. On utilise pour cette posture le terme «orientation de retour». Ladite orientation de retour est verticale dans l'exemple représenté. Dans une variante non représentée, l'orientation de retour peut être éloignée angulairement de la verticale de moins de 30 degrés, c'est-à-dire peu éloignée de la position verticale.

Le premier grand coté **11** forme une bordure de guidage et manœuvre. Les fonctions de guidage et d'entraînement sont localisés au voisinage de ce grand côté. Le bord correspondant à ce grand côté est reçu dans une/des rainure(s) de guidage et de réception de guides et d'embases tournantes comme il sera décrit plus loin.

Le bord opposé **12** est seulement guidé mais pas entrainé. La motorisation est ainsi relativement simple et se trouve localisée au voisinage de l'axe longitudinal **X1** du système de manutention.

La plaque support est engagée est entraînée dans une configuration substantiellement en porte-à-faux, i.e. dans la zone d'un grand côté **11** proche de l'axe **X1.** La zone située en dessous de la plaque support et du grand côté **12,** à l'opposé du côté d'entraînement, reste dépourvue de moyens d'entraînement. Le guidage permet un tel entraînement depuis un seul grand côté de manière fiable et précise.

La zone située en dessous de la plaque support est dédiée à la réception de pots et/ou de bouteilles qui sont maintenus par les plaques supports.

Comme le bord opposé **12** est libre de tout mécanisme d'entraînement, l'accès aux têtes fonctionnelles des modules process est facilité, et l'accès aux récipients, notamment par le dessous, est également facilité.

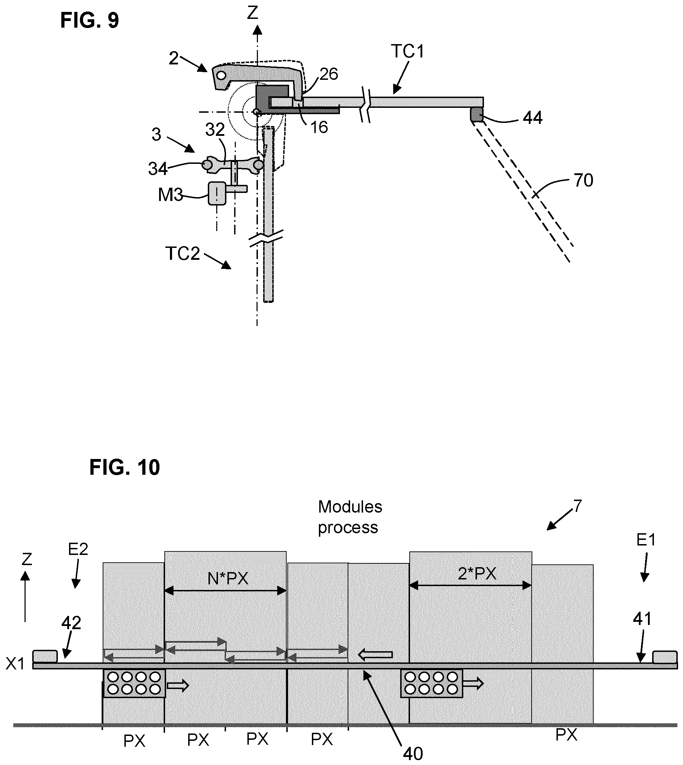

Selon une autre caractéristique, le bord long opposé **12** peut être supporté par un guide auxiliaire **44.** Ce guide auxiliaire peut être continu ou discontinu ; comme illustré la figure 9, ce guide auxiliaire 44 peut être porté par un bras **70** solidaire d'un des modules process susmentionnés **7i.** Ce guide auxiliaire **44** est de préférence amovible.

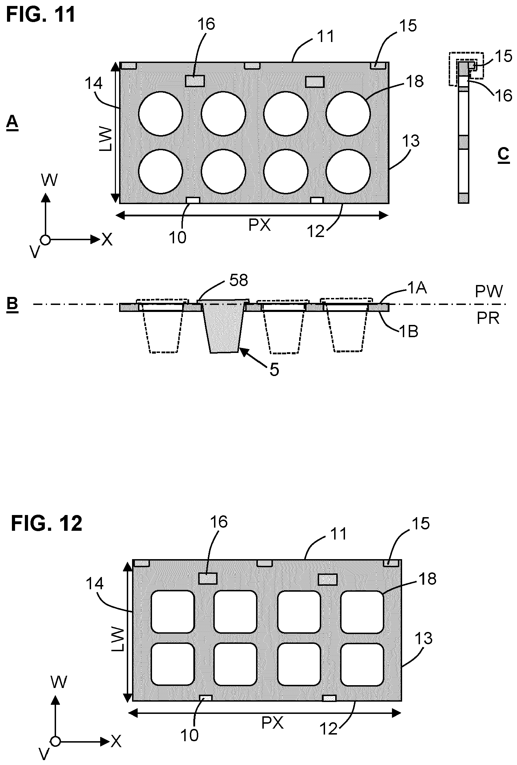

En référence aux figures 11 et 12, on constate que les logements prévus dans la plaque-support peuvent être ronds ou carrés suivant la forme des pots à traiter.

Chaque plaque-support comprend au moins une encoche **16** pour recevoir un doigt du premier organe de déplacement. On remarque que la ou les encoches **16** est (sont) de préférence traversante(s) sur l'épaisseur de la plaque. Ceci est facile à nettoyer et on évite que des saletés ne viennent se loger dans un trou borgne.

Dans l'exemple illustré, chaque plaque-support comprend deux encoches.

De plus, selon une option, il est prévu une saillie **15** formant projection hors plan, laquelle sert à retenir la plaque notamment dans son orientation verticale.

Selon une configuration, au lieu d'une saillie, on utilise pour le maintien de la plaque une rainure longitudinale repérée **19** dans laquelle vient se loger une nervure longitudinale **28, 29** prévue dans les moyens de guidage des plaques.

Dans une variante non représentée, la position des encoches **16** pour l'avancement des plaques et la position de la rainure longitudinale **19** pour le maintien et le guidage peuvent être confondues.

En outre, il peut être prévu des encoches auxiliaires repérées **10** qui peuvent être utilisées à des fins d'indexation sur les postes de traitement.

On remarque aussi que la plaque peut avoir une forme générale carrée au lieu de rectangle.

De plus il faut noter que les petits côtés ne sont pas forcément rectilignes ils peuvent comprendre un décroché convexe ou concave.

### Organes de déplacement

Dans le premier tronçon il est prévu un premier organe de déplacement **2** des plaques-support le long de la première direction axiale **X1A.** Dans une configuration illustrée, le premier organe est de type pas à pas. Toutefois, il faut noter que tout type de mécanisme déplacement peut être envisagé de la cadre de la présente invention.

Le premier organe de déplacement **2** comprend dans l'exemple illustré une barre transfert **21** qui s'étend généralement le long de la direction axiale et est monté pivotante autour de l'axe **X1.**

La barre transfert **21** du premier organe de déplacement **2** comprend un doigt **26** à distance de l'axe **X1** et configuré pour être reçu dans une encoche **16** de la plaque, le retour à vide du doigt et de la barre transfert étant réalisé alors que le doigt **26** n'est pas engagé.

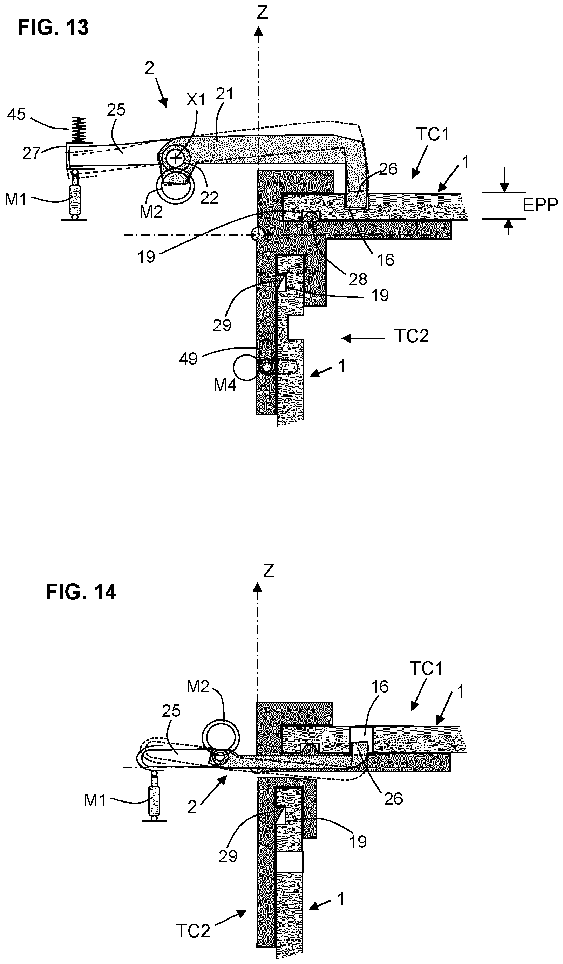

Comme illustré aux figures 13 et 14, la barre transfert **21** du premier organe de déplacement **2** fonctionne avec deux degrés de liberté, à savoir une rotation autour de **X1** et un avancement selon la direction axiale. La rotation permet l'engagement et le désengagement du doigt **26** dans une encoche **16.**

La translation axiale permet de faire avancer d'une distance prédéterminée une ou plusieurs plaques sur le premier tronçon. Dans l'exemple illustré à la figure 10, la distance prédéterminée coïncide avec la longueur axiale de la plaque c'est-à-dire le pas **PX.** Selon d'autres possibilités, par exemple avec deux encoches par plaque, la distance d'avance à chaque mouvement de la barre transfert peut être **PX/2.** Selon d'autres possibilités, par exemple avec quatre encoches par plaque, la distance d'avance à chaque mouvement de la barre transfert peut être **PX/4.**

La translation axiale est réalisée par un mécanisme de vis écrou ou crémaillère, on peut généralement utiliser un mécanisme de translation axiale connu en soi. Il est prévu un arbre d'axe noté **22,** qui peut être fixe ou solidaire de la barre transfert elle-même. Le dispositif comprend aussi un moteur noté **M2,** ou un moto-réducteur, qui est placé au voisinage de l'arbre d'axe. Un pignon en sortie vient s'engager sur une crémaillère ou une denture hélicoïdale pour déplacer la barre transfert **21** le long de la direction longitudinale X1, avec rotation de l'arbre d'axe 22 ou non selon les configurations possibles.

S'agissant du mouvement d'engagement et de dégagement du doigt, la barre transfert est équipée d'un levier arrière repéré **25** solidaire rigide en rotation du corps de la barre transfert ; De plus, le levier arrière **25** est reçu dans une liaison glissière **27** longitudinale. Le levier arrière **25** peut ainsi coulisser selon X1 dans la glissière 27. Comme dans le cas illustré à la figure 13, il est prévu un vérin de commande noté **M1** à simple effet ainsi qu'un ressort de rappel **45.** Le ressort de rappel a pour effet de basculer la barre transfert autour de l'axe X1 vers la position dégagée du doigt de commande 26, alors qu'à l'inverse l'actionnement du vérin M1 a pour effet de basculer la barre transfert dans la direction opposée et d'engager le doigt de commande dans l'encoche 16.

Sur la figure 14, on a illustré le cas d'un vérin à double effet ; dans ce cas le vérin est commandé dans une direction pour dégager le doigt de commande, et commandé dans la direction opposée pour engager le doigt de commande 26 afin de faire avancer les plaques.

Ainsi le premier organe de déplacement **2** peut être qualifié de « navette transfert ». Tout autre solution pour provoquer un avancement d'au moins une plaque sur une distance prédéterminée peut également être envisagée.

Concernant le nombre de doigts **26,** il peut être prévu autant de doigts que d'emplacement de plaques support dans le premier tronçon de travail ; dans ces conditions, la navette transfert engage simultanément toutes les plaques situées sur le tronçon de travail **TC1.** Ainsi la barre transfert 21 et l'arbre d'axe 22 parcourent quasiment toute la longueur du système de manutention excepté le cas échéant les extrémités. Ainsi, les plaques ne se poussent pas les unes des autres et ne sont pas nécessairement adjacentes, il peut y avoir un petit intervalle formant jeu fonctionnel. Ceci permet aussi de faire fonctionner la machine en essai avec uniquement quelques plaques.

Dans une autre variante, la navette transfert engage seulement la première plaque située au début du premier tronçon et les plaques se poussent les unes les autres jusqu'à la fin du premier tronçon. L'arbre d'axe et la barre transfert sont alors beaucoup plus courts, c'est-à-dire l'ordre de grandeur correspond à la longueur d'une plaque PX ou un peu plus.

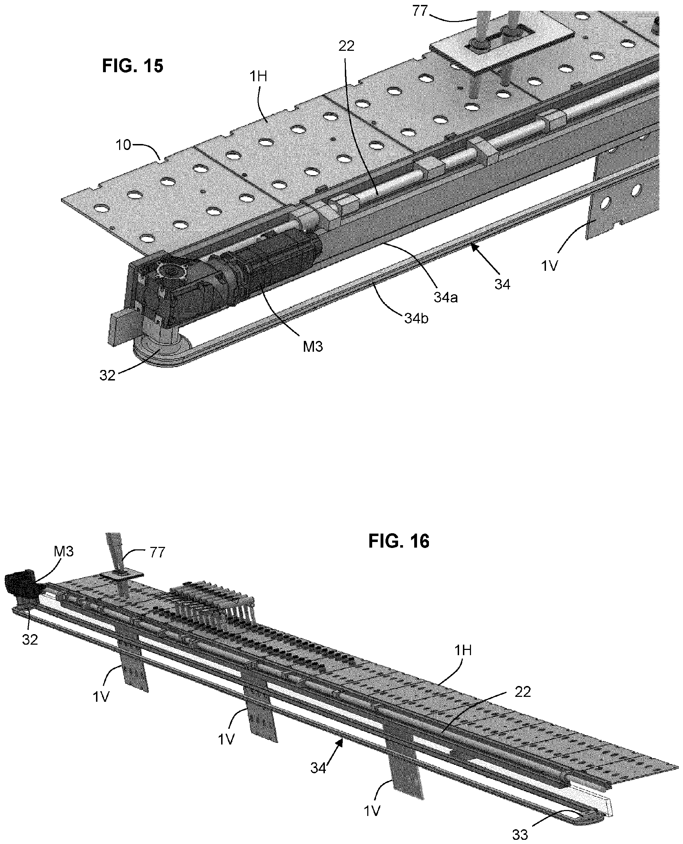

En alternative, la navette transfert peut travailler par le dessous comme illustré aux figures 14 et 15, cas illustré plus loin. Lorsque la barre transfert **21** est située en dessous de la face supérieure **1A** des plaques dans le tronçon de travail, la zone située au-dessus du plan de travail repéré **PW** est libre de tout élément qui peut présenter une gêne ou un risque de pollution.

Lorsque le vérin **M1** pousse vers le haut la barre de commande bascule autour de **X1** et le doigt de commande 26 est dégagé de l'encoche 16. À l'inverse lorsque **M1** pousse vers le bas, la barre de commande bascule inversement autour de **X1** et le doigt de commande 26 est engagé de l'encoche 16.

Le système de manutention comprend un deuxième organe de déplacement **3** configuré pour déplacer les plaques-support dans la deuxième direction axiale **X1B** dans le deuxième tronçon **TC2.** Le deuxième organe de déplacement est de préférence de type continu ou discontinu.

Comme visible aux figures 9, 15 et 16, le deuxième organe de déplacement comprend une courroie sans fin repérée **34.** Cette courroie est guidée et entraînée par deux poulies à gorge, dont une poulie meneuse **32** entraînée par un moteur **M3** et une poulie suiveuse **33** à l'autre extrémité de la courroie. La courroie vient frotter sur la face inférieure **1B** des plaques, en posture d'orientation de retour, à savoir en position verticale, pour les entraîner de la deuxième extrémité **E2** vers la première extrémité **E1.**

Selon un exemple la courroie est à double denture : une denture à l'intérieur pour l'entraînement de la courroie par la poulie et une denture à l'extérieur pour l'entraînement des plaques-support par la courroie.

En lieu et place de la courroie, le deuxième organe de déplacement peut être formé par une chaîne à maillons articulés montée en boucle sur deux pignons dentés aux extrémités. Un premier pignon denté est moteur, et l'autre est monté sur un support rappelé élastiquement par ressort pour tendre à maintenir une tension suffisante sur la chaîne en permanence. Il peut être prévu des patins fixés coté extérieur de certains maillons de la chaîne en boucle pour venir en appui sur les plaques dans leur posture verticale et entrainer les plaques.

Plus précisément, un brin de travail **34a** est agencé au contact des plaques qui se situent sur le deuxième tronçon alors qu'un brin de retour **34b** est à distance des plaques et sert pour le retour à vide. La vitesse d'avance du brin de travail de la courroie est relativement rapide. En pratique elle est au moins égale à la vitesse d'avance de la barre transfert dans le sens opposé. Par exemple la vitesse d'avance de la courroie **34** peut être au moins égale à 500 mm par seconde.

La motorisation des plaques sur le deuxième tronçon pourrait être différente de celle illustrée par exemple un système avec impulsion, un retour par gravité, ou tout autre solution rendu possible par le fait qu'il n'y ait pas d'opération de travail sur les plaques sur ce tronçon de retour.

La motorisation des plaques sur le deuxième tronçon pourrait être réalisée par une navette transfert à grand pas (un multiple de PX).

Comme illustré sur les figures 6 à 8, le premier poste de rotation **PR1** comprend une première embase tournante **41** du côté de la première extrémité **E1.** La première embase tournante fait pivoter les plaques-support vers la position horizontale, pour les engager sur le premier tronçon TC1. La première embase tournante peut être formée comme un élément monté à rotation autour d'un axe confondu avec **X1** ou voisin de ce dernier, cet élément étant piloté en position angulaire par un moto réducteur avec deux capteurs fins de course ou un moteur pas à pas avec un capteur fin de course.

La première embase tournante **41** est donc déplaçable entre une première position adaptée pour accueillir une plaque-support arrivant sur le deuxième tronçon dans un orientation de retour et une deuxième position adaptée pour placer une plaque-support en position horizontale en entrée du premier tronçon.

Il peut être prévu une butée effaçable **49** qui subordonne l'entrée d'une plaque verticale en retour dans l'embase tournante **41** à une position de réception verticale de cette embase tournante. La butée effaçable **49** peut être commandée sélectivement par un petit actuateur **M4.** En variante, la butée effaçable peut être une forme intégrée dans le flanc de l'embase tournante **41,** sans nécessiter une commande spécifique autre que la rotation de l'embase tournante **41.**

Cette butée effaçable n'est pas nécessaire si on utilise une navette transfert pour le tronçon de retour.

Du côté de la deuxième extrémité **E2,** le deuxième poste de rotation PR2 comprend une deuxième embase tournante **42.** La deuxième embase tournante fait pivoter les plaques-support vers l'orientation de retour pour les engager sur le deuxième tronçon TC2.

La deuxième embase tournante peut être formée comme un élément monté à rotation autour d'un axe confondu avec **X1** ou voisin de ce dernier, cet élément étant piloté en position angulaire par un moto réducteur avec deux capteurs fins de course ou un moteur pas à pas avec un capteur fin de course. Si la voie est libre, la deuxième embase tournante fait pivoter la plaque en position verticale et l'insère immédiatement dans le deuxième tronçon de retour **TC2.**

Chacune des embases tournantes comprend une rainure de réception du bord longitudinal, i.e. le grand coté **11** formant bordure de guidage et manœuvre.

Tant la première embase tournante que la deuxième embase tournante comprennent un moyen de rétention des plaques. Lorsque la plaque contient une projection hors plan **15,** les embases tournantes comprennent un logement formant glissière pour recevoir cette projection hors plan (Cf figure 11).

Dans une variante, chaque plaque-support **1** comporte une rainure 19 de guidage. Les embases tournantes comprennent une nervure en saillie **29** sur laquelle vient porter à l'intérieur de la rainure **19** ménagée dans les plaques. (cf Fig 13 et 14 partie basse).

En outre, il est prévu un support guide principal fixe **40,** disposé de manière continue le long de la première direction axiale **X1A,** entre les première et deuxième embases tournantes **41,42.** Le support est ainsi continu pour les plaques depuis la première extrémité **E1** jusqu'à la deuxième extrémité **E2.**

Le support guide principal comprend une nervure **28** qui permet le guidage longitudinal des plaques, la nervure **28** étant reçue dans la rainure **19.**

Comme illustré la figure 13, le support guide principal est formé comme un profilé à section généralement constante le long de **X1.** Ce profilé permet d'une part de guider des plaques en position horizontale qui transitent dans le premier tronçon **TC1,** et d'autre part de guider des plaques en position verticale dans le deuxième tronçon **TC2** où elles circulent en retour.

Ce genre de système avec plaques-support peut être utilisé aussi dans des machines ou des installations qui traitent des récipients de produits non alimentaires auxquelles la présente invention peut être appliquée.

### Fonctionnement

Dans le premier tronçon de travail, les plaques sont déplacées séquentiellement d'un poste à un autre par le premier organe de déplacement **2** décrit plus haut. Les plaques sont en position horizontale repère **1H** en figures 15 et 16. Suivant la configuration de la machine, diverses opérations sont effectuées à poste fixe, dans l'intervalle de temps entre les mouvements aller de la barre transfert. Selon un exemple très simplifié, illustré la figure 15, il est prévu des buses de dosage repérées **77,** localisé à l'endroit d'une des positions de la plaque.

A la fin du tronçon de travail **TC1,** la deuxième embase tournante **42** effectue une rotation de chaque plaque-support **1** autour de l'axe longitudinal de référence **X1** d'un angle θ (90° dans un cas type). Suite à quoi, chaque plaque parcourt le tronçon de retour en gardant substantiellement cette orientation. Les plaques sont en position verticale repère **1V** en figures 15 et 16. Les plaques sont déplacées le long du deuxième tronçon **TC2** par le deuxième organe de déplacement **3** décrit plus haut.

Après quoi la première embase tournante **41** fait tourner la plaque support qui subit une rotation dans le sens inverse autour de l'axe longitudinal X1 d'un angle -θ, c'est-à-dire opposé à l'angle appliqué par la deuxième embase tournante.

Sur le fonctionnement complet en boucle, il faut remarquer que le premier tronçon **TC1** est totalement occupé par les plaques, alors que le deuxième tronçon **TC2** ne comprend que quelques plaques, comme ceci est visible de la figure 16.

Ainsi, le nombre de plaques sur le premier tronçon peut être compris entre une dizaine et une trentaine suivant la configuration de la machine. Par contraste, on ne trouve que 1 à 4 plaques sur le tronçon de retour TC2. Avantageusement, on minimise le nombre total de plaques nécessaires pour le système de manutention et le process de l'installation.

### Autre mode de réalisation

Les figures 18 à 21 illustrent un autre mode de réalisation. Il faut noter que ci-après tout ce qui n'est pas décrit en particulier doit être considéré comme identique ou similaire à ce qui a été décrit pour le système de manutention des en relation avec les figures 1 à 17.

Ici, les plaques sont réalisées en deux parties à savoir d'une part une plaque plane notée **1'** avec les logements 18 et d'autre part un profilé technique **17** pour les fonctions guidage et entrainement. Le profilé technique **17** de guidage et entrainement comporte une rainure de guidage **190** dont les fonctions sont identiques à la rainure 19 précédemment décrite.

Ici, le profilé technique **17** de guidage et entrainement comporte deux encoches **160** agencées sur la tranche de la plaque, coté du grand côté. Le profilé technique **17** présente une longueur **PX** identique à la dimension longitudinale de la plaque **PX.** La plaque plane 1' est obtenue à partir d'un flan dans lequel on pratique des perçages, donc elle est facile à réaliser.

Le profilé technique **17** est fixée sous la plaque, i.e. fixé à la face inférieure **1B** de la plaque **1'.** Rien de dépasse du plan supérieur **1A** de la plaque. Le profilé technique **17** est obtenu par moulage plastique.

En référence aux figures 19 et 20, une plaque a été ôtée, une autre est rendu transparente mais son profilé technique **17** est représenté. Les rainures **190** reçoivent un rail de guidage **280** fixe sur la machine, lequel s'étend sur la longueur de la machine entre les embases tournantes 41,42. La navette transfert comprend des doigts repérés **260.** Ces doigts 260 sont montés sur une barre transfert qui peut sélectivement pivoter autour d'un axe du premier organe de déplacement sélectivement et avancer longitudinalement d'un pas prédéfini (PX, PX/2, PX/4). En figure 20, la flèche en pointillés montre le mouvement d'engagement et de dégagement du doigt **260** par rapport à l'encoche **160.**

L'embase tournante **41** comprend également une nervure de guidage sur laquelle s'engage la rainure **190.** L'embase tournante **41** comprend un bras 410 formant butée longitudinale. En figure 19, le trait en pointillés montre le mouvement rotation du bout du bras **410.**

On note que la longueur du bras **410** est plus courte que la largeur **LW** des plaques. Dans un exemple, la longueur du bras **410** est environ 50% de la largeur **LW.**

Selon une variante qui peut être appliqué à tous les modes de réalisations, on traite avec un cas particulier les récipients qui ne présentent pas de collerette (cf Fig 18). Dans ce cas, le récipient ne repose pas directement sur la plaque mais sur un sabot **79** agencé à distance sous la plaque, cette distance correspondant à la hauteur du récipient **5** à traiter. Ce sabot est relié à la plaque par quatre colonnettes **78.**

De plus, la face inférieure du profilé technique 17 est équipée de picots 134 ou de petites dents qui favorisent l'accroche du deuxième organe de déplacement 3.

Plus précisément, lesdits picots 134 coopèrent avec la courroie d'entraînement 34 déjà mentionnée et décrite plus haut, dans les modes de réalisation précédents, la coopération étant en particulier visible sur la figure 21.

Il peut y avoir une denture sur la face externe de la courroie d'entraînement qui vient s'engager dans les picots présents sur la face inférieure du profilé technique **17.**

En référence à la figure 21, dans le deuxième tronçon TC2, à savoir le tronçon de retour, la plaque support 1 est seulement maintenue via le profilé technique 17.Plus précisément, il est prévu, d'une part, une rainure **188** dans le profilé technique **17,** et d'autre part un rail de support repéré **288** solidaire du châssis de la machine 6 en particulier ici solidaire d'un longeron repéré **39.**

Le rail de support **288** reçoit la rainure 188 et fournit ainsi un guidage translatif longitudinal pour la plaque support le long de l'axe X.

En outre, on note que le rail de support **288** supporte le poids de la plaque support **1,1'.**

Selon l'axe transversal **Y,** le profilé technique 17 est interposé entre la courroie d'entraînement **34** et un élément de butée repéré **180** sur lequel vient porter un épaulement **170** du profilé technique 17. Autrement dit, nous avons une prise en sandwich du profilé technique 17 selon l'axe transversal Y ce qui permet de fiabiliser l'entraînement de retour sur le deuxième tronçon TC2.

La poulie d'entraînement **32,** respectivement de guidage, entraîne ou respectivement guide la courroie d'entraînement **34** comme déjà exposé cidessus.

Selon un aspect particulier et avantageux, il faut noter que la plaque support 1 présente uniquement des fonctions mécaniques, la plaque support ne comprend pas de fonction pneumatique, pas de bouche pneumatique ou de conduite pneumatique.

## Revendications

1. Système de manutention, dans une machine de traitement de récipients destinés à recevoir un produit alimentaire, le système de manutention comprenant :
- une pluralité de plaques-support (1) circulant en circuit fermé, chaque plaque-support (1) comprenant un ou plusieurs logements, chaque logement (18) étant apte à recevoir un récipient (5),
- un premier tronçon (TC1), dit de travail, dans lequel les plaques-support circulent en position horizontale dans une première direction axiale (X1A), avec un premier organe de déplacement (2) des plaques-support le long de la première direction axiale, le premier organe étant de préférence de type pas à pas, chacune des plaques supports étant entraînée uniquement par un de leur bord longitudinal,
- un deuxième tronçon (TC2), dit de retour rapide, avec un deuxième organe de déplacement (3) configuré pour déplacer les plaques-support selon une deuxième direction axiale (X1B) opposée à la première direction axiale,
**caractérisé en ce que** les plaques-support circulent sur le deuxième tronçon dans une orientation de retour, ladite orientation de retour étant verticale ou éloignée angulairement de la verticale de moins de 30 degrés,
et **en ce que** le système de manutention comprend :
- un premier poste de rotation (PR1) agencé à une première extrémité (E1) du système de manutention, configuré pour faire pivoter les plaques-support vers la position horizontale, pour les engager sur le premier tronçon (TC1),
- un deuxième poste de rotation (PR2) agencé à une deuxième (E2) extrémité du système de manutention, configuré pour faire pivoter les plaques-support vers l'orientation de retour pour les engager sur le deuxième tronçon (TC2).

2. Système selon la revendication 1, dans lequel le premier poste de rotation (PR1) comprend une première embase tournante (41), et le deuxième poste de rotation (PR2) comprend une deuxième embase tournante (42) et il est prévu un support guide principal fixe (40), disposé de manière continue le long de la première direction axiale (X1A) entre les première et deuxième embases tournantes.

3. Système selon l'une des revendications 1 à 2, dans lequel le premier organe de déplacement (2) comprend deux degrés de liberté, à savoir une rotation autour de la direction axiale (X1) et un avancement selon la direction axiale (X1).

4. Système selon l'une des revendications 1 à 3, dans lequel chaque plaque-support (1) comprend au moins une encoche (16;160) pour recevoir un doigt (26;260) du premier organe de déplacement, de préférence deux encoches.

5. Système selon l'une des revendications 1 à 3, dans lequel le premier organe de déplacement comprend un doigt (26;260) à distance de l'axe X1 et configuré pour être reçu dans une encoche de la plaque, le retour à vide du doigt étant réalisé alors que le doigt n'est pas engagé.

6. Système selon l'une des revendications 1 à 5, dans lequel chaque plaque-support s'étend généralement dans un plan de référence (PR), avec une forme générale rectangle, chaque plaque-support comprenant deux grands côtés, i.e. un premier grand coté (11) formant bordure de guidage et manœuvre, un autre grand coté formant bordure libre (12).

7. Système selon l'une des revendications 1 à 6, dans lequel il est prévu au moins une projection hors plan (15) ou une nervure ou une rainure (19;190) dans chaque plaque pour le maintien de la plaque notamment lorsqu'elle est en orientation de retour.

8. Système selon la revendication 6, dans lequel il est prévu un support guide auxiliaire (44) pour supporter les plaques supports, coté porte à faux, i.e. du côté de la bordure libre.

9. Système selon l'une des revendications 1 à 8, dans lequel le deuxième organe de déplacement (3), est formé comme un convoyeur à courroie (34) ou à chaîne en boucle ou l'organe de déplacement comprend des galets motorisés.

10. Système selon l'une des revendications 1 à 9, dans lequel il est prévu que le nombre de plaques dans le premier tronçon (TC1 ) est supérieur au double du nombre de plaques dans le deuxième tronçon (TC2).

11. Système selon l'une des revendications 1 à 10, dans lequel au poste de rotation (PR1), on forme arrêt pour les plaques verticales en retour en attendant la position ad hoc de l'embase tournante.

12. Machine pour traiter des pots ou des bouteilles de produit alimentaire, comprenant un système de manutention conforme à l'une des revendications précédentes.
